# EUROPÄISCHE PATENTANMELDUNG

(11) **EP 2 578 672 A1**
(43) Veröffentlichungstag der Anmeldung: **10.04.2013**
(21) Anmeldenummer: 12184440.1
(22) Anmeldetag: 14.09.2012
(51) Int. Cl.: C11C 3/00, C10L 1/02

(54) **Verfahren zur Herstellung von Fettsäurealkylestern**

(30) Priorität: 14.09.2011 EP 11181227
(71) Anmelder: Ebner, Stefan, 61440 Oberursel/Taunus (DE)
(72) Erfinder: Ebner, Stefan, 61440 Oberursel/Taunus (DE)
(74) Vertreter: Köster, Hajo

(57) **Zusammenfassung**

Bereitgestellt wird ein Verfahren zur Herstellung von Fettsäurealkylestern aus freien Fettsäuren in einem Einsatzmaterial, das neben den freien Fettsäuren auch Fettsäureglyceride enthält. Bei diesem Verfahren werden die freien Fettsäuren in dem Einatzmaterial in Anwesenheit eines Katalysators mit mindestens einem C₁-C₅-Alkohol umgesetzt. Dieses Verfahren zeichnet sich dadurch aus, dass als Katalysator ein saures Sulfonsäureharz, das beim Versetzen mit dem zum Einsatz gebrachten C₁-C₅-Alkohol diesen Alkohol unter Gewichtszunahme aufnimmt, eingesetzt wird, der Katalysator vor der Umsetzung mit dem zum Einsatz gebrachten C₁-C₅-Alkohol beladen wird und die freien Fettsäuren mit dem zum Einsatz gebrachten C₁-C₅-Alkohol, mit dem der Katalysator beladen ist, umgesetzt werden.

## Beschreibung

Die Erfindung betrifft ein Verfahren zur Herstellung von Fettsäurealkylestern aus freien Fettsäuren in einem Einsatzmaterial, das neben den freien Fettsäuren auch Fettsäureglyceride enthält, bei dem die freien Fettsäuren in dem Einsatzmaterial in Anwesenheit eines Katalysators mit mindestens einem C₁-C₅-Alkohol umgesetzt werden.

Biodiesel wird typischerweise aus Einsatzmaterialien, welche Monoglyceride und/oder Diglyceride und/oder Triglyceride enthalten, gewonnen. Dieses Einsatzmaterial wird mit Methanol in Gegenwart eines Katalysators umgeestert. Bei der Umesterung der genannten Glyceride mit einem Alkylalkohol werden Fettsäurealkylester und Glycerin erhalten.

Bei denjenigen Verfahren, die schon seit längerer Zeit praktiziert werden, kann jedoch nur ein Einsatzmaterial eingesetzt werden, das einen niedrigen Gehalt an freien Fettsäuren (FFA) enthält.

Es gibt daher schon Bestrebungen, Öle mit einem hohen FFA-Gehalt (beispielsweise Schmierfette, Brat- bzw. Frittieröle, verbrauchte Pflanzenöle und -fette, Pflanzenöle aus nicht als Nahrungsmittel verwendeten Feldfrüchten) für die Produktion von Biodiesel einzusetzen.

Bei der Verwendung eines Einsatzmaterials mit einem hohen FFA-Gehalt treten jedoch verschiedene Schwierigkeiten auf. Eine Zusammenfassung der sich stellenden Probleme findet sich in der DE 10 2008 060 902 A1. In dieser Druckschrift sind auch die auf dem hier in Rede stehendem Gebiet relevanten weiteren Druckschriften aufgeführt und diskutiert. Auf diese Darlegungen in der DE 10 2008 060 902 A1 wird hiermit ausdrücklich Bezug genommen. E. SANTACERIA et al. befassen sich in "Kinetics and Mass Transfer of Free Fatty Acids Esterification with Methanol in a Tubular Packed Bed Reactor: A key Pretreatment in Biodiesel Production", INDUSTRIAL & ENGINEERING CHEMISTRY RESEARCH, Bd. 46, Nr. 15, 1. Juli 2007 (2007-07-01), Seiten 5113-5121 mit der Veresterungsreaktion von langkettigen Fettsäuren mit Methanol unter Verwendung von sauren Harzen als Katalystor, der in einem Bettreaktor fixiert ist. Dabei wird ein Öl, das mit einer Fettsäure versetzt ist, zusammen mit Methanol in den Reaktor gegeben und miteinander umgesetzt.

Aus der EP 178 54 78 A1 ist ein Verfahren zur Herstellung eines Alkylesters einer Fettsäure bekannt, bei dem eine Veresterungsumsetzung zwischen einer freien Fettsäure, die in einem Fett oder Öl enthalten ist und einem Alkohol beschrieben wird. Dabei findet eine Trans-Veresterungsumsetzung zwischen einem Fett oder Öl und einem Alkohol statt. Als Katalysator werden feine alkoholunlöslische alkalische Partikel eingesetzt, die auf einem Träger angeordnet sind, bei dem es sich um einen geschäumten Artikel aus einem sauermodifizierten Harz handelt.

Die US 2008/0114181 A1 beschreibt ein Verfahren zur Veresterung von freien Fettsäuren in Triglyceriden mit C₁-C₈ aliphatischen Alkoholen, bei dem ein saures Ionenaustauscherharz als Katalysator eingesetzt wird. Der Katalysator wird mit einer Reaktionsmischung in Kontakt gebracht, welche ein Triglycerid mit mindestens 1 Gew.-% freien Fettsäuren und einen aliphatischen C₁-C₈ Alkohol enthält. Es werden dabei Bedingungen angewendet, die für eine Veresterung geeignet sind. Bei dem Katalysator handelt es sich um einen solchen vom Gel-Typ.

Bei allen Umsetzungen, die in den oben aufgeführten Druckschriften erwähnt sind, werden einerseits das Einsatzmaterial, welches eine freie Fettsäure enthält, und andererseits das für die Veresterung dienende Methanol in freier Form in Anwesenheit des Katalysators zur Umsetzung gebracht.

Aufgabe der vorliegenden Erfindung ist es, ein Verfahren bereit zustellen, das gegenüber den bisher bekannten Verfahren verbessert ist und deren Nachteile vermeidet.

Gelöst wird diese Aufgabe durch ein Verfahren, bei dem als Katalysator ein saures Sulfonsäureharz eingesetzt wird. Dieses saure Sulfonsäureharz hat die Eigenschaft, dass es, wenn es mit einem erfindungsgemäß eingesetzten und somit mit einem zum Einsatz gebrachten C₁-C₅―Alkohol versetzt bzw. vermischt wird, unter Aufnahme des erfindungsgemäß eingesetztem bzw. zum Einsatz gebrachten C₁-C₅―Alkohols an Gewicht zunimmt und dabei quillt.

Der hier verwendete Begriff "zum Einsatz gebracht" bezieht sich dabei sowohl in den Ansprüchen als auch in der Beschreibung auf einen einzelnen Alkohol ausgewählt unter den C₁-C₅-Alkoholen, beispielsweise Methanol, oder auf eine Mischung aus zwei, drei, vier oder mehreren dieser C₁-C₅-Alkohole. Dieser Begriff wird somit aus Gründen der besseren Darstellbarkeit verwendet und steht stellvertretend für die geschilderten Möglichkeiten.

Beim oben beschriebenen Vorgang nimmt das Harz, das mit dem zum Einsatz gebrachten C₁-C₅―Alkohol, insbesondere mit Methanol, versetzt worden ist, den zum Einsatz gebrachten Alkohol und insbesondere Methanol auf und - wie gesagt - quillt dabei unter Gewichtszunahme. Diese Eigenschaft dient im Rahmen der vorliegenden Anmeldung zur Charakterisierung des erfindungsgemäß einsetzbaren sauren Sulfonsäureharzes.

Erfindungsgemäß werden vorzugsweise solche Harze eingesetzt, die nach dem Versetzen des Harzes mit Methanol eine Gewichtszunahme von mindestens 40 % zeigen. Vorzugsweise beträgt die Gewichtszunahme mindestens 50 %. Am meisten bevorzugt werden solche Harze eingesetzt, die eine Gewichtszunahme von mindestens 70 % zeigen.

Bei den erfindungsgemäß zum Einsatz gebrachten C₁-C₅-Alkoholen handelt es sich um Methanol, Ethanol, Propanol, Isopropanol, Butanol, wie n-Butanol und die weiteren Butanol-Isomere, sowie Pentanol, wie n-Pentanol und die weiteren Pentanol-Isomere.

Erfindungsgemäß wird mindestens ein C₁-C₅-Alkohol eingesetzt. Es kann jedoch auch eine Mischung aus einem, zwei, drei, vier oder mehreren dieser Alkohole zur Anwendung gelangen. Die Mischungsverhältnisse können beliebig sein. Vorzugsweise wird Methanol oder ein Gemisch aus Methanol und einem oder mehreren C₂-C₅-Alkohol(en), der bzw. die zu den oben beschriebenen Alkoholen gehören, eingesetzt. Zweckmäßigerweise ist Methanol dabei im Überschuss vorhanden und macht mindestens 40 Gew.-% des Gemisches aus.

Bei dem erfindungsgemäßen Verfahren wird der eingesetzte Katalysator bzw. das eingesetzte Harz, das fest vorliegt, vor der Umsetzung mit dem zum Einsatz gebrachten C₁-C₅-Alkohol beladen. Beim Beladen wird der zum Einsatz gebrachte Alkohol vom Katalysator unter Gewichtszunahme bzw. unter Quellen aufgenommen bzw. aufgesogen. Dies wird nachstehend auch als "Resorbieren" bezeichnet, ohne an eine bestimmte technische oder naturwissenschaftliche Interpretation des Begriffes "Resorbieren" gebunden zu sein.

Um den Katalysator mit dem zum Einsatz gebrachten Alkohol zu beladen, wird der Katalysator mit diesem zum Einsatz gebrachten Alkohol vermischt. Vorzugsweise wird der Katalysator zum Beladen in getrockneter Form eingesetzt.

Nachdem der zum Einsatz gebrachte Alkohol von dem Katalysator resorbiert wurde, wird der nicht resorbierte Alkohol abgetrennt, beispielsweise abfiltriert.

Die geschilderte Vermischung des Katalysators mit dem zum Einsatz gebrachten Alkohol stellt nur eine der möglichen Arten der Herstellung des beladenen Katalysators dar. Entscheidend ist lediglich, dass der zum Einsatz gebrachte Alkohol von dem Katalysator resorbiert worden ist und somit nicht mehr in separater, flüssiger Form vorliegt. Bekanntlich sind alle C₁-C₅-Alkohole bei Normaltemperatur flüssig.

Beim erfindungsgemäßen Verfahren wird der beladene Katalysator mit dem Einsatzmaterial vermischt. Danach erfolgt die Umsetzung, die batchweise bzw. chargenweise oder kontinuierlich erfolgen kann.

Das erfindungsgemäße Verfahren ist unter anderem dadurch gekennzeichnet, dass die freien Fettsäuren mit dem zum Einsatz gebrachten C₁-C₅―Alkohol, mit dem der Katalysator beladen ist, umgesetzt werden. Bei der Umsetzung reagiert somit der Alkohol, der von dem Katalysator resorbiert wurde, mit den im Einsatzmaterial vorhandenen freien Fettsäuren. Bei diesen Fettsäuren kann es sich um eine einzelne Fettsäure-species oder um mehrere chemisch verschiedene Fettsäuren handeln. Eine separate Zuführung von dem zum Einsatz gebrachten Alkohol, beispielsweise Methanol, erfolgt nicht

Das bei der Veresterung gebildet Wasser verbleibt im Katalysator und befindet sich daher nicht in dem nach dem erfindungsgemäßen Verfahren behandelten, vom Katalysator abgetrennten Einsatzmaterial. Daher ist es im Gegensatz zu dem bisher bekannten Verfahren auch nicht erforderlich, das gebildete Wasser aus dem Einsatzmaterial zu entfernen, um dieses Einsatzmaterial der oben geschilderten Weiterverarbeitung zu Biodiesel zuzuführen.

Das gebildete Wasser wird aus dem Katalysator entfernt, wenn dieser erneut mit dem zum Einsatz gebrachten Alkohol beladen wird.

Nach einer bevorzugten Ausführungsform wird der Katalysator mit einer Mischung aus einem zum Einsatz gebrachten Alkohol und aus einer Säure beladen. Die Veresterungsumsetzung in dem Einsatzmaterial bei dieser Ausführungsform erfolgt somit mit einem Katalysator, der nicht nur mit einem zum Einsatz gebrachten Alkohol sondern auch mit der Säure beladen ist. Auch in diesem Fall stammt der Alkohol, der mit der freien Fettsäure zu einem Fettsäurealkylester umgesetzt wird, von bzw. aus dem Katalysator. Separater Alkohol bzw. Methanol wird bei der Umsetzung nicht zugeführt.

Als Säure kann eine organische oder anorganische Säure verwendet werden, die oder deren wässrige Lösung in dem zum Einsatz gebrachten Alkohol und insbesondere in Methanol löslich ist. Bevorzugt wird eine anorganische Säure und insbesondere Schwefelsäure, Salzsäure oder Salpetersäure eingesetzt. Es ist auch möglich, als Säure eine Mischung aus zwei, drei oder mehr derartigen Säuren zum Einsatz zu bringen. Auch eine derartige Mischung von Säuren wird hier stellvertretend mit dem Begriff "Säure" im Singular bezeichnet. Die Mischung zum Beladen des Katalysators enthält die Säure vorzugsweise in einer Menge von 0,3 bis 5,0, weiterhin vorzugsweise 0,5 bis 4,0 und insbesondere bevorzugt in einer Menge von 1,5 Gew.-%. Der angegebene Bereich von 0,3 bis 5,0 Gew.-%. umfasst alle darin enthaltenen Einzelwerte, beispielsweise: 0,3, 0,4, 0,5, 0,6, 0,7, 0,8, 0,9, 1,0, 1,1, 1,2, 1,3, 1,4, 1,5, 1,6, 1,7, 1,8, 1,9, 2,0, 2,1, 2,2, 2,3, 2,4, 2,5, 2,6, 2,7, 2,8, 2,9, 3,0, 3,1, 3,2, 3,3, 3,4, 3,5, 3,6, 3,7, 3,8, 3,9, 4,0, 4,1, 4,2, 4,3, 4,4, 4,5, 4,6, 4,7, 4,8, 4,9 und 5,0 Gew.-%.

Das Einsatzmaterial wird vorzugsweise erwärmt, insbesondere auf 50°C, und homogenisiert, bevor der beladene Katalysator hinzu gegeben wird. Die Umsetzung wird vorzugsweise in einem geschlossenen Autoklaven vorgenommen. Zudem wird bei der Umsetzung vorzugsweise erhitzt.

Weiterhin bevorzugt wird auf eine Temperatur von 50°C bis zur Siedetemperatur des zum Einsatz gebrachten Alkohols erhitzt, sofern die Umsetzung bei Raumdruck erfolgt. Wird ein geschlossener Autoklav zum Einsatz gebracht, dann wird vorzugsweise auf eine Temperatur von 50°C bis 150°C erhitzt. Die Umsetzung kann somit bei Temperaturen von beispielsweise 50°C, 60°C, 70°C, 80°C, 90°C, 100°C, 110°C, 120°C, 130°C, 140°C und 150°C durchgeführt werden.

Insbesondere bevorzugt wird die Umsetzung bei einer Temperatur von 65°-95°C durchgeführt. Weiterhin bevorzugte Temperaturen sind 75°C, 85°C und 95°C.

Der Katalysator und das Einsatzmaterial können bei der Umsetzung in solchen Mengen vorliegen, dass sich ein Teil des Katalysators in dem verwendeten Reaktionsgefäß oberhalb des oberen Flüssigkeitsspiegel des Einsatzmaterials befindet. Alternativ und bevorzugt können der Katalysator und das Einsatzmaterial bei der Umsetzung in solchen Mengen vorliegen, dass das Einsatzmaterial den Katalysators in dem verwendeten Reaktionsgefäß bedeckt; mit anderen Worten, das Einsatzmaterial bildet einen Überstand.

Das Einsatzmaterial wird vorzugsweise ausgewählt aus der Gruppe bestehend aus Schmierfetten, Fettsäuren aus der Seifenspaltung, Destillationsfettsäuren, Brat- und Frittierölen, verbrauchten und unverbrauchten Pflanzenölen und -fetten und Pflanzenölen aus nicht als Nahrungsmittel verwendeten Feldfrüchten und verbrauchten oder unverbrauchten Fetten und Ölen auf tierischer Basis.

Das mit Hilfe des erfindungsgemäßen Verfahren erhaltene veränderte Einsatzmaterial bzw. das erhaltene Verfahrensprodukt, bei dem der FFA-Gehalt auf Grund der Veresterung verringert ist, kann auf per se bekannte Weise einer Umesterungsreaktion, insbesondere mit Methanol, zur Herstellung von Biodiesel unterworfen werden. Gegenstand der Erfindung ist daher auch die Verwendung des nach dem erfindungsgemäßen Verfahrens erhaltenen Einsatzmaterials bzw. Verfahrensproduktes zur Biodieselherstellung oder in einem Verfahren zur Biodieselherstellung.

Das erfindungsgemäße Verfahren wird anhand der folgenden Beispiele näher erläutert.

### Beispiel 1

### Beladen eines Harzes mit Methanol

Als Harz bzw. Katalysator wurde ein Sulfonsäureharz in trockener Form, nämlich Amberlite® BD10 dry von Room und Haas eingesetzt. Es handelte sich dabei um dunkelbraune sphärische Kügelchen.

776 g dieses Harzes wurden in Methanol aufgeschwemmt. Danach wurde überschüssiges Methanol abfiltriert. Die eingesetzte Harzmenge nahm 603 g Methanol auf. Die Gewichtszunahme betrug somit 77,7 %. Dieses Harz wir nachstehend als Harz 1 bezeichnet.

Dieser Versuch wurde mit einem weiteren Harz wie oben beschrieben wiederholt. Dabei wurde Purolite® PD206 von Purolite International Ltd. eingesetzt. Es handelte sich dabei um ein Ionenaustauscherharz mit sauren Sulfonsäuregruppen; das Polymer ist aus einem Polystyrolgel, das mit Divinylbenzol vernetzt ist, aufgebaut. Das Harz liegt in Form harter sphärischer Kügelchen vor.

200 g dieses Harzes nahmen 165 g Methanol auf. Die Gewichtszunahme betrug somit 82 %. Diese Harz wird nachstehend als Harz 2 bezeichnet.

### Beispiel 2

### Variation der Umsetzungsdauer

Freie Fettsäuren (FFA) von BD Kampen wurden bei einer Temperatur von 75°C im geschlossenen Autoklav gemäß dem in der nachstehenden Tabelle spezifizierten Bedingungen umgesetzt und dabei verestert. Der FFA-Gehalt des anfänglichen Einsatzmaterials betrug 14,6 Gew.-%.

Das Einsatzmaterial wurde erwärmt, bis die Fette gelöst sind (ca. 50°C) und dann homogenisiert. Anschließend wurde das Einsatzmaterial zusammen mit dem Harz 1 in den Autoklaven gegeben. Im Autoklaven herrschte Harzüberstand. Mit anderen Worten, der oberer Flüssigkeitsstand des Einsatzmaterials lag unterhalb der obersten Harzschicht. Nach Verschließen des Autoklaven wurde auf 75°C erhitzt. Der Druck im Autoklaven ergab sich ausschließlich durch die Temperaturerhöhung.

Nach Durchführung der Umsetzung wurde der Autoklav bei Raumtemperatur auf 55°C abgekühlt. Die im Autoklaven vorhandene Flüssigkeit wurde im warmen Zustand abfiltriert. Danach wurde auf 120°C erhitzt, um überschüssiges Methanol zu entfernen.

Die Einzelheiten sind in der nachstehenden Tabelle zusammengefasst.

| Versuch | Dauer der Umsetzung in h | Druck bei der Umsetzung in bar | FFA-Gehalt nach der Umsetzung (Gew.-%) | Verringerung des FFA-Gehalts um (Gew.-%) |
|---|---|---|---|---|
| 2.1 | 0,5 | 0,3 | 10,1 | 4,5 |
| 2.2 | 1,0 | 0,3 | 6,13 | 8,47 |
| 2.2 | 2,0 | 0,6 | 4,32 | 10,28 |

### Beispiel 3

### Variation der Temperatur

Es wurde wie im Beispiel 2 verfahren. Der Unterschied bestand darin, dass die Umsetzung bei unterschiedlichen Temperaturen durchgeführt wurde. Die Ergebnisse sind in der nachstehenden Tabelle zusammengefasst.

| Versuch | Temperatur in °C | Druck bei der Umsetzung in bar | Dauer der Umsetzung in h | FFA-Gehalt nach der Umsetzung (Gew.-%) | Verringerung des FFA-Gehalts um (Gew.-%) |
|---|---|---|---|---|---|
| 3.1 | 75 | 0,3 | 1,0 | 6,24 | 8,36 |
| 3.2 | 85 | 0,9 | 1,0 | 7,6 | 6,97 |
| 3.3 | 95 | 1,6 | 1,0 | 3,24 | 11,36 |
| 3.4 | 120 | 6,5 | 1,0 | 2,93 | 11,67 |

### Beispiel 4

### Variation des Methanolgehaltes im Harz 1

Im Autoklaven wurden FFA von UBPM umgesetzt und damit verestert. Die Temperatur betrug 75°C.

Das Harz wurde frisch mit Methanol beladen. Das nach der ersten Umsetzung erhaltende Harz wurde nicht erneut mit Methanol versetzt. Vielmehr wurde das nach dem ersten Versuch erhaltene Harz in dem zweiten Versuch eingesetzt und dazu mit unbehandelten/unveresterten FFA versetzt und dann umgesetzt. Analog wurde das nach dem zweiten Versuch erhaltene Harz dann in dem dritten Versuch verwendet.

Der FFA-Gehalt der Ausgangsproben bei jedem Versuch betrug 18,2 Gew.-%. Ansonsten wurde wie im Beispiel 2 beschrieben verfahren.

| Versuch | Temperatur in °C | Druck bei der Umsetzung in bar | Dauer der Umsetzun g in h | FFA-Gehalt nach der Umsetzung (Gew.-%) | Verringerung des FFA-Gehalts um (Gew.-%) |
|---|---|---|---|---|---|
| 4.1 | 75 | 0,4 | 1,0 | 7,9 | 10,3 |
| 4.2 | 75 | 0,3 | 1,0 | 11,2 | 7,0 |
| 4.3 | 75 | 0,3 | 1,0 | 12,1 | 6,1 |

### Beispiel 5

### Variation des Methanolgehaltes im Harz 1

Im Autoklaven wurden FFA von BD Kampen, die mit Palmkern-FFA versetzt wurden, bei 75°C umgesetzt und somit verestert. Das Harz wurde frisch mit Methanol beladen. Das nach der ersten Umsetzung erhaltene Harz wurde nicht erneut mit Methanol beladen sondern analog zum Beispiel 4 unbehandelt für den zweiten Versuch eingesetzt. Gleiches gilt für die Versuche 3 und 4. Der FFA-Gehalt der Ausgangsproben bei jedem Versuch betrug 35,6 Gew.-%.

Ansonsten wurde wie in Beispiel 2 beschrieben verfahren.

Die erhaltenen Ergebnisse sind in der nachstehenden Tabelle zusammengefasst:

| Versuch | Temperatur in °C | Druck bei der Umsetzung in bar | Dauer der Umsetzung in h | FFA-Gehalt nach der Umsetzung (Gew.-%) | Verringerung des FFA-Gehalts um (Gew.-%) |
|---|---|---|---|---|---|
| 5.1 | 75 | 0,3 | 1,0 | 14,7 | 20,9 |
| 5.2 | 75 | 0,3 | 1,0 | 26,2 | 9,4 |
| 5.3 | 75 | 0,3 | 1,0 | 30,3 | 5,3 |
| 5.4 | 75 | 0,3 | 1,0 | 32,9 | 2,7 |
| 5.5 | 75 | 0,3 | 1,0 | 33,8 | 1,8 |

Aus den in letzterer Tabelle zusammengefassten Daten ergibt sich, dass die Fähigkeit des eingesetzten Harzes, die FFA zu verestern, bereits nach dem ersten Versuch bzw. der ersten Reaktion um ca. die Hälfte abnimmt.

### Beispiel 6

### Beladung des Harzes mit reinem Methanol und einer Mischung aus Methanol und einer anorganischen Säure.

Die Beladung des Harzes erfolgte wie im Beispiel 1 beschrieben mit reinem Methanol oder mit einer Mischung aus Methanol und einer in der nachstehenden Tabelle aufgeführten anorganischen Säure. Für die Herstellung der Mischung wurde die Säure dem Methanol in einer Menge von 1,5 Gew.-% zugegeben.

Als Einsatzmaterial wurde ein solches von BD Kampen eingesetzt. Der anfängliche FFA-Gehalt betrug 20,02 %.

Bei der Umsetzung wurde wie im Beispiel 2 beschrieben verfahren. Es wurde jedoch im geschlossenen Autoklav auf 70°C erhitzt. Die Dauer der Umsetzung betrug 0,5 h.

Die erhaltenen Ergebnisse sind in der nachstehenden Tabelle zusammengefasst:

| Versuch | Katalysator beladen mit | Druck bei der Umsetzung in bar | FFA-Gehalt nach der Umsetzung (Gew.-%) | Verringerung des FFA-Gehalts um (Gew.-%) |
|---|---|---|---|---|
| 6.1 | MeOH, rein | 0,4 | 17,73 | 2,47 |
| 6.2 | 100 Gewt**.MeOH plus 1,5 Gewt** 96-%ige* H₂SO₄ | 0,3 | 11,92 | 8,1 |
| 6.3 | 100 Gewt** MeOH plus 1,5 Gewt** 65-%ige* HNO₃ | 0,6 | 7,54 | 12,48 |
| 6.4 | 100 Gewt** MeOH plus 1,5 Gewt** 37-%ige* HCl | 0,6 | 5,42 | 14,6 |

| | | | | |
|---|---|---|---|---|
| * = wässrig; ** Gewt = Gewichtsteile | | | | |

Bei allen oben beschriebenen Beispielen nimmt der FFA-Gehalt dadurch ab, dass diese FFA (free fatty acids) mit dem durch das im Harz/Katalysator vorhandene Methanol zum entsprechenden Methylester verestert werden. Dabei schrumpft das Volumen des Harzes bzw. des Harzbettes entsprechend dem Verbrauch an Methanol.

## Patentansprüche

1. Verfahren zur Herstellung von Fettsäurealkylestern aus freien Fettsäuren in einem Einsatzmaterial, das neben den freien Fettsäuren auch Fettsäureglyceride enthält, bei dem die freien Fettsäuren in dem Einatzmaterial in Anwesenheit eines Katalysators mit mindestens einem C₁-C₅-Alkohol umgesetzt werden,
**dadurch gekennzeichnet, dass**
als Katalysator ein saures Sulfonsäureharz, das beim Versetzen mit dem zum Einsatz gebrachten C₁-C₅―Alkohol diesen Alkohol unter Gewichtszunahme aufnimmt, eingesetzt wird,
der Katalysator vor der Umsetzung mit dem zum Einsatz gebrachten C₁-C₅ ― Alkohol beladen wird und
die freien Fettsäuren mit dem zum Einsatz gebrachten C₁-C₅― Alkohol, mit dem der Katalysator beladen ist, umgesetzt werden.

2. Verfahren nach Anspruch 1,
**dadurch gekennzeichnet, dass**
ein saures Sulfonsäureharz als Katalysator eingesetzt wird, das nach Versetzen mit Methanol eine Gewichtszunahme von mindestens 30 %, vorzugsweise mindestens 40 % sowie insbesondere bevorzugt von mindestens 70 % besitzt.

3. Verfahren nach Anspruch 1 oder 2,
**dadurch gekennzeichnet, dass**
der Katalysator vor der Umsetzung mit einer Mischung aus dem zum Einsatz gebrachten C₁-C₆-Alkohol und aus einer Säure beladen wird.

4. Verfahren nach Anspruch 3,
**dadurch gekennzeichnet, dass**
als Säure eine anorganische Säure, insbesondere Schwefelsäure, Salzsäure oder Salpetersäure, eingesetzt wird.

5. Verfahren nach Anspruch 3 oder 4,
**dadurch gekennzeichnet, dass**
die Säure der Mischung zum Beladen des Katalysators in einer Menge von 0,3 bis 5,0, insbesondere 0,5 bis 4,0 und weiterhin insbesondere 1,5 Gew.-%, zugegeben wird.

6. Verfahren nach einem der vorhergehenden Ansprüche,
**dadurch gekennzeichnet, dass**
die Umsetzung in einem geschlossenen Autoklaven durchgeführt wird.

7. Verfahren nach einem der vorhergehenden Ansprüche,
**dadurch gekennzeichnet, dass**
bei der Umsetzung erhitzt wird.

8. Verfahren nach Anspruch 6,
**dadurch gekennzeichnet, dass**
die Umsetzung bei Atmosphärendruck durchgeführt wird und
auf eine Temperatur von 50°C bis zur Siedetemperatur des zum Einsatz gebrachten C₁-C₅ ― Alkohols erhitzt wird.

9. Verfahren nach einem der Ansprüche 1 bis 7,
**dadurch gekennzeichnet, dass**
die Umsetzung in einem geschlossenen Autoklaven durchgeführt wird und auf eine Temperatur von 50 °C bis 150 °C erhitzt wird.

10. Verfahren nach einem der vorhergehenden Ansprüche,
**dadurch gekennzeichnet, dass**
der Katalysator in getrockneter Form zum Beladen mit dem zum Einsatz gebrachten C₁-C₅ ― Alkohol oder mit der Mischung aus dem zum Einsatz gebrachten Alkohol und der Säure eingesetzt wird.

11. Verfahren nach einem der vorhergehenden Ansprüche,
**dadurch gekennzeichnet, dass**
der Katalysator zum Beladen mit dem zum Einsatz gebrachten C₁-C₅ - Alkohol oder mit der Mischung aus dem zum Einsatz gebrachten Alkohol und der Säure vermischt wird und überschüssige, nicht resorbierte Flüssigkeit abgetrennt wird.

12. Verfahren nach einem der vorhergehenden Ansprüche,
**dadurch gekennzeichnet, dass**
Methanol oder eine Mischung aus Methanol und aus mindestens einem weiteren C₂-C₅-Alkohol als zum Einsatz gebrachter C₁-C₅ ― Alkohol eingesetzt wird.

13. Verfahren nach einem der vorhergehenden Ansprüche,
**dadurch gekennzeichnet, dass**
das Verfahren chargenweise oder kontinuierlich durchgeführt wird.

14. Verfahren nach einem der vorhergehenden Ansprüche,
**dadurch gekennzeichnet, dass**
das Einsatzmaterial ausgewählt ist aus der Gruppe bestehend aus Schmierfetten, Fettsäuren aus der Seifenspaltung, Destillationsfettsäuren, Brat- und Frittierölen, verbrauchten und unverbrauchten Pflanzenölen und -fetten und Pflanzenölen aus nicht als Nahrungsmittel verwendeten Feldfrüchten und verbrauchten oder unverbrauchten Fetten und Ölen auf tierischer Basis.

15. Verfahren nach einem der vorhergehenden Ansprüche,
**dadurch gekennzeichnet, dass** ein, zwei oder drei der folgende Schritte i), ii) und iii) unternommen werden:
i) der Katalysator wird in Form von Pulver oder geformten Teilen, insbesondere Kugeln, Extrudaten oder Tabletten, oder beschichteten Strukturen, insbesondere Waben, eingesetzt,
ii) der Katalysator und das Einsatzmaterial liegen bei der Umsetzung in solchen Mengen vor, dass das Einsatzmaterial den Katalysators in dem verwendeten Reaktionsgefäß bedeckt,
iii) der Katalysator wird nach der Umsetzung von dem Einsatzmaterial abgetrennt.

16. Verwendung des nach dem Verfahren gemäß einem der vorhergehenden Ansprüche erhaltenen Einsatzmaterials zur Biodieselherstellung oder in einem Verfahren zur Herstellung von Biodiesel.
